# EUROPEAN PATENT APPLICATION

(11) **EP 4 667 869 A1**
(43) Date of publication of application: **24.12.2025**
(21) Application number: 25181804.3
(22) Date of filing: 10.06.2025
(51) Int. Cl.: G01C 11/02, G06T 5/80

(54) **IMPROVEMENT OF SATELLITE IMAGE ACCURACY WITH MOBILE MAPPING TRAJECTORIES**

(30) Priority: 17.06.2024 US 202418745548
(71) Applicant: Maxar Intelligence Inc., Westminster, Colorado 80234 (US)
(72) Inventor: MIECZNIK, Grzegorz, Westminster, 80234 (US); VAN SICKLE, Jan, Westminster, 80234 (US)
(74) Representative: ARC-IP

(57) **Abstract**

Satellite images have inherent geo-positional errors of orders a few meters. Corrections are achieved by adjusting a sensor model which maps ground coordinates of control features into image coordinates and establishing a correspondence between the ground and image features, in this case a road network. The ground coordinates are obtained from mobile pose points. To adjust the sensor model we rely on the fact that the roads are typically much more uniform than surrounding features, and therefore have smaller entropy. The sensor model is adjusted so that the image pixels, obtained from projecting ground coordinates of the mobile pose points onto the image, minimize the entropy of the pixels that represent the road network.

## Description

### CROSS-REFERENCE TO RELATED APPLICATION

This application claims the benefit of, and priority to, U.S. Patent Application No. 18/745,548, filed on June 17, 2024. The entire disclosure of the above application is incorporated herein by reference.

### TECHNICAL FIELD

Example embodiments described herein relate generally to the field of satellite imaging. More particularly, the disclosure herein relates to reduction of offset errors that can be caused by deviations between actual and reported satellite ephemeris and sensor or camera pointing direction which affect geolocation of satellite imagery.

### BACKGROUND

To be useful in most contexts, an image obtained by a satellite must be accurately correlated to the terrestrial features. If there is a difference between the satellite's actual pointing direction and the pointing derived from the satellite's metadata even a very small amount, on the scale of microradians, then the coordinates of the points in the satellite image will deviate from their actual positions.

To address these offsets, satellite images can be corrected using sensor models that adjust the satellite image using the satellite's pointing position and orientation as inputs. The satellite image can be reviewed for certain known features, such as buildings or natural features that are distinctive and therefore provide good correlation between the image and the actual features in the area that has been imaged.

### SUMMARY

The example embodiments described herein meet the above-identified needs by providing methods, systems and computer program products for improving the geolocation of satellite imagery.

According to a first aspect, a method for improving a pointing accuracy of a satellite imaging system is provided. The method includes receiving a set of ground coordinates of a region, the set of ground coordinates including a plurality of positions of pose points. The method further includes obtaining a satellite image of the region, the satellite image defining image coordinates. The method includes mapping the ground coordinates to the satellite image, including the plurality of pose points, according to a sensor model function having input parameters. A trajectory is defined in the satellite image of the region based upon the positions of the plurality of pose points. A path is defined in the satellite image of the region, the path extending perpendicular to the track. A weighting function is applied to the path. The method includes determining a level of uniformity of a portion of the satellite image within the path as weighted by the weighting function as a function of the input parameters, and identifying a selected set of the input parameters that result in a desired level of uniformity. The satellite image geolocation can then be corrected based on the selected set of input parameters.

The set of ground coordinates can be obtained from a mobile mapping resource. The pose points can be arranged on a roadway. The pose points can each include latitude, longitude, and altitude on the roadway. A predetermined width of the path can be based on an approximate lane or roadway width. The sensor model function can use a rational polynomial coefficient function, an azimuth-elevation function, and a satellite ephemeris function. The predetermined width can be based upon data from the mobile mapping resource. The level of uniformity can be a level of entropy.

According to a second aspect, a computer readable medium stores a set of instructions which, when executed, perform a method for mapping a structure. The method executed by the set of instructions can include receiving a set of ground coordinates of a region, the set of ground coordinates including a plurality of positions of pose points. The method further includes obtaining a satellite image of the region, the satellite image defining image coordinates. The method includes mapping the ground coordinates to the satellite image, including the plurality of pose points, according to a sensor model function having input parameters. The method further includes defining a trajectory in the satellite image of the region based upon the positions of the plurality of pose points. The method further includes defining a path in the satellite image of the region, the path extending perpendicular to the track, and assigning a weighting function to the path. The method further includes determining a level of uniformity of a portion of the satellite image within the path as weighted by the weighting function as a function of the input parameters. The method further includes identifying a selected set of the input parameters that result in a desired level of uniformity, and correcting a satellite image geolocation based on the selected set of input parameters.

The set of ground coordinates can be obtained from a mobile mapping resource. The pose points can be arranged on a roadway. The pose points can each include latitude, longitude, and altitude of one of the set of ground coordinates. A predetermined width of the path can be based on a typical roadway width. The predetermined width can be modified based on the satellite image of the region, or it can be based upon data from the mobile mapping resource.

According to a third aspect, a method of improving a level of correspondence between a set of image coordinates of a captured image and a set of ground coordinates of an area including pose points captured in the captured image is described. The method includes identifying a high-uniformity region including a plurality of pose points located in the area, the pose points defined in the ground coordinates. The method includes defining a trajectory in the set of image coordinates, the trajectory based upon ground locations of the pose points. The method includes defining a path in the set of image coordinates, the path extending perpendicular to the trajectory by a predetermined width and including a weighting function. The method includes adjusting input parameters of a sensor model function to determine a level of uniformity in the path as a function thereof, and adjusting the captured image according to an improved set of input parameters that correspond to a sufficiently high value of the function.

The pose points can be arranged on a roadway. The pose points can each include latitude, longitude, and altitude information. The predetermined width can be based on a typical roadway width, or can be determined based on an image of the region.

### BRIEF DESCRIPTION OF THE DRAWINGS

The features and advantages of the example embodiments of the invention presented herein will become more apparent from the detailed description set forth below when taken in conjunction with the following drawings.
FIGS. 1A and 1B are simplified schematic views of a satellite obtaining an image of a target.
FIGS. 2A and 2B show example mappings of correspondence between satellite position of a feature of interest and actual position of that feature, reflecting error in sensor model parameters such as pitch and roll.
FIG. 2C shows a graphical representation of a probabilistic weighting function used in a model for identifying a single-trajectory path in a satellite image.
FIG. 2D shows a graphical representation of a probabilistic weighting function used in a model for identifying a dual-trajectory path in a satellite image.
FIGS. 3A and 3B are partial views taken from the images of FIGS. 2A and 2B showing high and low uniformity portions thereof, respectively.
FIG. 4A shows an actual satellite image of a roadway, with all portions thereof excluded except for pose points .
FIG. 4B shows a network of mobile trajectories, reduced for the illustration purpose, covering an example area of interest in Phoenix, Arizona.
FIGS. 4C and 4D show improvement in the image geo-position obtained by correcting the sensor model with roll and pitch values which minimize the entropy of the imaged region.
FIG. 5 shows a model of path uniformity of an image as a function of pitch and roll parameters used in a satellite image processing model, based on entropy of the path.
FIG. 6 is a method for applying a correction to a satellite image to increase the pointing accuracy thereof.
FIG. 7 depicts an example block diagram of a virtual or physical operating environment.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives falling within the spirit and scope of the subject matter as defined by the claims.

### DETAILED DESCRIPTION

The example embodiments of the invention presented herein are directed to methods, systems and computer program products for improving geolocation of satellite images. Examples are now described herein in terms of an example aerial or satellite imagery of features to include roadways. This description is not intended to limit the application of the example embodiments presented herein. In fact, after reading the following description, it will be apparent to one skilled in the relevant art(s) how to implement the following example embodiments in alternative embodiments (e.g., involving any form of imagery and/or imagery of features other than roads).

Illustrative examples of the disclosure are described below. In the interest of clarity, not all features of an actual implementation are described in this specification. It will of course be appreciated that in the development of any such actual example, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity.

The following section defines some of the terminology used throughout this disclosure. The definitions provided below are intended to be consistent with common usage in the field of satellite imaging, and are for clarification only. However, to the extent that these definitions conflict with common usage, the definitions below are intended to control.

"Image" or "satellite image" is used throughout this disclosure to refer to an image acquired from an aerial or satellite-mounted sensor or camera. Although "satellite image" may be used as a shorthand to describe such images, there is no practical difference between an image acquired from a balloon, a non-orbiting spacecraft, a satellite, an airplane, or any other non-terrestrial sensor or camera. Increasingly, aerial images are obtained from small unmanned aerial vehicles. Imagery obtained by any and all of these types of sensor or cameras are intended to be within the scope of "image" or "satellite image" as used throughout this disclosure.

The image places features at "image coordinates." The image coordinates are 2-Dimensional entities, typically labeled line and sample, (or line and pixel) for features captured in an image can be based upon an algorithm or model that relates the line and sample image coordinates to ground coordinates and vice versa.

"Sensor model" is a term that describes physical and mathematical model relating 3-Dimensional ground coordinates and 2-Dimensional image coordinates, and vice versa. The sensor model typically uses inputs such as external orientation parameters, including the roll and pitch parameters defined and described in more detail below, whose purpose is to refine the mapping between ground and image coordinates. The methods described in this application can be used with different types or external orientation parameters which reduce pose point errors, such as used with Azimuth-Elevation model (AzEl) or Rational Polynomial Coefficients (RPCs).

"Pitch" and "roll" are used in some of the models described above. Pitch and roll are terms that describe the orientation of a sensor or camera that can collect an image. Pitch and roll are both terms used to describe the rotational movements of an object, particularly in the context of aerospace, robotics, and other fields involving three-dimensional motion. Pitch refers to the rotational movement of the sensor or camera about its lateral axis, while roll refers to the rotational movement of the sensor or camera or sensor about its longitudinal axis, which is an imaginary line running from the front to the back of the sensor or camera. Roll is a measure of the side-to-side tilt or rotation of the sensor or camera. In the context of satellite imaging systems, pitch and roll refer to the two main types of movements that can be controlled to mount a sensor or camera on a satellite. Pitch refers to the up and down movement of the sensor or camera or sensor along the vertical axis.

While pitch and roll are descriptors of the orientation of a camera or satellite, as used in this disclosure these terms refer to input parameters to a sensor model. The sensor model translates image coordinates (2D) ground coordinates (3D) based on the pitch and roll that are input into a model for processing the 2D image coordinates. The estimated pitch and roll are input into the model(s) to properly translate the 2D image coordinates to 3D ground coordinates. However, even slight inaccuracies in the values input to the model compared to the actual pitch and roll of the camera can cause inaccurate transformations by the model, resulting in inaccurate 3D ground coordinate calculations. By discovering the pitch or roll more accurately, these transformations can be improved.

Both pitch and roll, as well as other aspects such as range and yaw, are encompassed within the concept of "pointing accuracy" of a sensor or camera according to one model that is described in detail in this application. For push-broom satellites, corrections to roll and pitch are typically sufficient to refine geolocation of a satellite image, whereas corrections to yaw have a very small effect on the geolocation and can be ignored without the loss of generality.

While pitch and roll are used throughout this disclosure, a person having ordinary skill in the field of satellite image processing will understand that other external defining exterior orientation parameters (such as ephemeris) could be used in different sensor models. In other sensor models, such as those implementing Rational Polynomial Coefficient (RPC) modeling, coefficients used as inputs to the satellite imaging model may not include coefficients that are specific to only pitch or only roll, even though those physical parameters are related to the coefficients that are used. Other models such as azimuth and elevation(AzEl) models are also contemplated. The concepts described herein related to pitch, roll, ephemeris, and the like, could also be implemented using other input parameters that are used in such models without departing from the scope of this disclosure. It should be understood that in alternative models, such as the AzEl and RPC models described above, different metrics for pointing accuracy may be discovered and improved instead. In general, this disclosure relates to discovering inputs of an image-space-to-ground-coordinate model with a higher degree of accuracy, no matter whether those inputs are pitch and roll, coefficients to a function, or some other input.

"Mobile mapping" is a field of surveying and mapping that is commonly used for collecting data used on web mapping platforms, in mapping for autonomous vehicle navigation, and many more applications. Specifically, mobile mapping as used herein refers to the process of collecting geospatial data on roadways from mobile vehicles. Roadway mapping companies often utilize pose points as part of their mapping and localization processes. Pose points have a well-established meaning in the context of robotics. In the more specific context of roadway mapping-and as used herein-the term "pose points" refers to specific locations on the road where the position and orientation of the mapping vehicle are accurately determined. A mobile mapping vehicle may collect pose points above the road and they may subsequently moved down onto the road. These points serve as reference markers for mapping software to accurately place features such as road edges, lane markings, signs, and other infrastructure elements within the digital map.

"Ground coordinates" refer to three dimensional coordinates on the ground. Ground coordinates are typically expressed as latitude, longitude, and height, or X, Y, and Z coordinates in a Cartesian, Earth-Centered, Earth-Fixed coordinate system, though other coordinate systems can be used that uniquely identify a ground coordinate's position.

"Uniformity" and "entropy" are referred to herein as aspects of images or portions of images. These terms are used to refer to the level of variability of some aspect (typically brightness, but also potentially other image qualities such as color) of an image. Uniformity is a broader term that refers to a lack of variability of the measured parameter across an area of an image. Entropy is a well-known term that refers to a level of disorder, and which is a sub-category of uniformity. While various embodiments herein describe using measures of entropy, it should be understood that other measures of uniformity could be used equally well to accomplish the desired objectives.

"Trajectory" and "path" are related terms that have distinct meanings. Pose points arranged along a roadway, when interconnected from one to the next, form a trajectory. The trajectory typically follows a roadway or a lane of a roadway. Paths also extend along a the trajectory, as well as perpendicular thereto by a path width. Paths are centered on the trajectory. Paths can optionally also be given weights or weighting functions in a direction perpendicular to the roadway. For example, a typical lane of a roadway may have a width of four meters, and so a path following along the trajectory in that lane may have a width of four meters. A path of a width of a few meters, centered on a mobile trajectory following a road, may constitute a very smooth and uniform area in comparison to surrounding features.

Ground pixels representing the path can also be weighted according to a weighting function. The function can be a Gaussian distribution (truncated to include only values greater than approximately 10%, or 5%, or 1%, or 0.1% of the normalized Gaussian distribution) or similar so that the pixels closest to the center of the path which is on the trajectory, have the largest weight, whereas the pixels father out have smaller weights. The weights are used to form a uniformity measure with ground pixels projected onto the image, such as entropy. Other weighting functions or cost functions can also be assigned that include, for example, a square function having a defined width, or a sum of two Gaussian functions centered on adjacent trajectories,

Pose points defining the trajectory that in turn defines the path are projected onto a 2D satellite image using a sensor model, and the corresponding image pixels can be used to calculate a representation of the entropy for all of the paths defined across a single image, or joint entropy and mutual information for multiple overlapping images. Every pixel participating in the computation of the entropy can weighted according to the weighting function as described above when a weighting function is used. The exact knowledge of path width is not critical for the successful determination of the sensor parameters.

Corrections to the sensor model can be applied to correct for any of a number of types of distortions that can affect satellite imagery. These types of corrections are described generally, for example, in Chintan et al., "A Survey on Geometric Correction of Satellite Imagery," International Journal of Computer Applications (0975-8887), Vol. 116 No. 12 (April 2015).

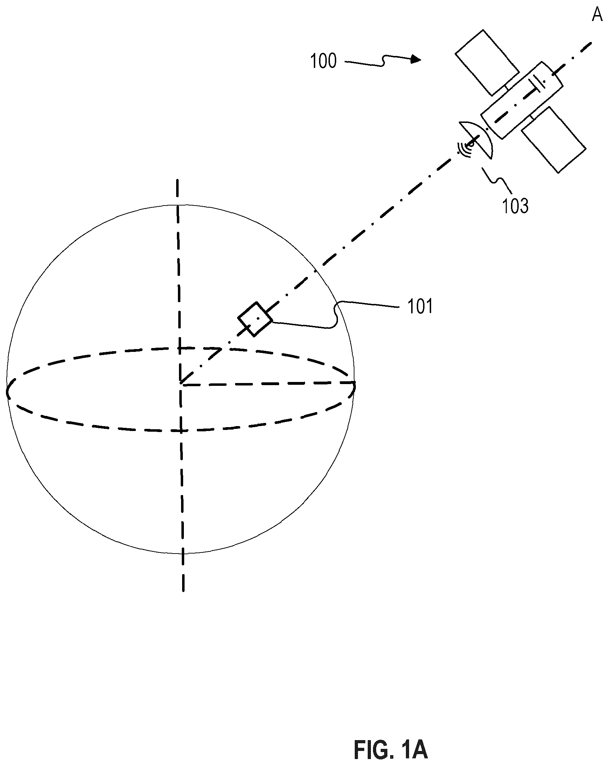

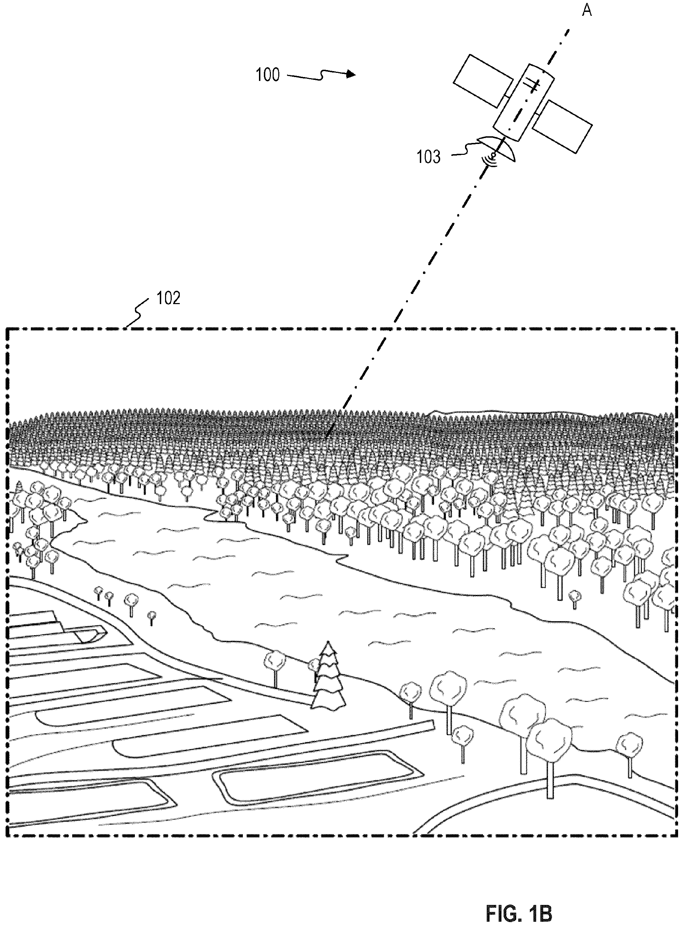

FIGS. 1A and 1B are a representation of a system for satellite imaging. As shown in FIGS. 1A and 1B, a satellite 100 is pointed along an axis A towards a target 101 to generate an image 102 thereof by a sensor or camera 103.

Satellite 100 can be any of a variety of remote platforms, such as a space station or communications or imaging satellite as shown, or even a platform that is not fully in space such as a balloon, or an airplane, drone, glider, or the like. Depending upon the elevation and speed relative to the ground (e.g., whether the satellite 100 is in low earth orbit, geosynchronous orbit, in the atmosphere, etc.).

Target 101 is a location that the satellite 100 is imaging. In FIG. 1A, target 101 is a location on a sphere, representing a satellite image of Earth. However, the methods and systems disclosed herein may be usable in other contexts. For example, other planets, moons, or manmade structures currently in existence or that may be constructed in the future may have features thereon that are usable according to methods described herein.

Target image 102 can include a variety of features as shown in FIG. 1B, including natural features like rivers, streams, trees, and mountains that are present at target 101. Additionally, target image 102 includes any manmade features such as roads, rails, and buildings at the target 101. FIG. 1B shows target image 102 unobstructed, but it should be understood that there can be clouds, smoke, smog, or other obstructions between the target and the sensor or camera 103 that would result in the target image 102 lacking clarity because of lack of a clear line of sight between the satellite 100 and the target 101.

Sensor or camera 103 can be any of a variety of commercial sensors or cameras that can be mounted to a satellite 100. Sensor or camera 103 is carefully aligned along axis A and pointed towards a desired target 101 so that target image 102 does not depict an area that is offset from the desired target 101.

Sensor or camera 103 can be a color camera, or a black-and-white camera that measures brightness of visible light as a whole. Generally, the output of sensor or camera 103 will be an image file or a set of image files that can be stitched together to form a larger image or mapping of an area of interest.

If the sensor model projecting image coordinates on the ground, and vice versa, has errors due to imperfect knowledge of where the camera is pointing in the terrestrial reference frame, image pixels will not be properly geo-referenced. Because of the distance between satellite 100 and typical targets 101, even slight pointing error can cause such issues. As described above, corrections to the sensor model are defined in terms of corrections to as pitch and roll, coefficient inputs to a model, or the like. These inputs and models are described in detail in American Society for Photogrammetry and Remote Sensing, Manual of Photogrammetry, 6th ed. Bethesda, MD: ASPRS, 2013.

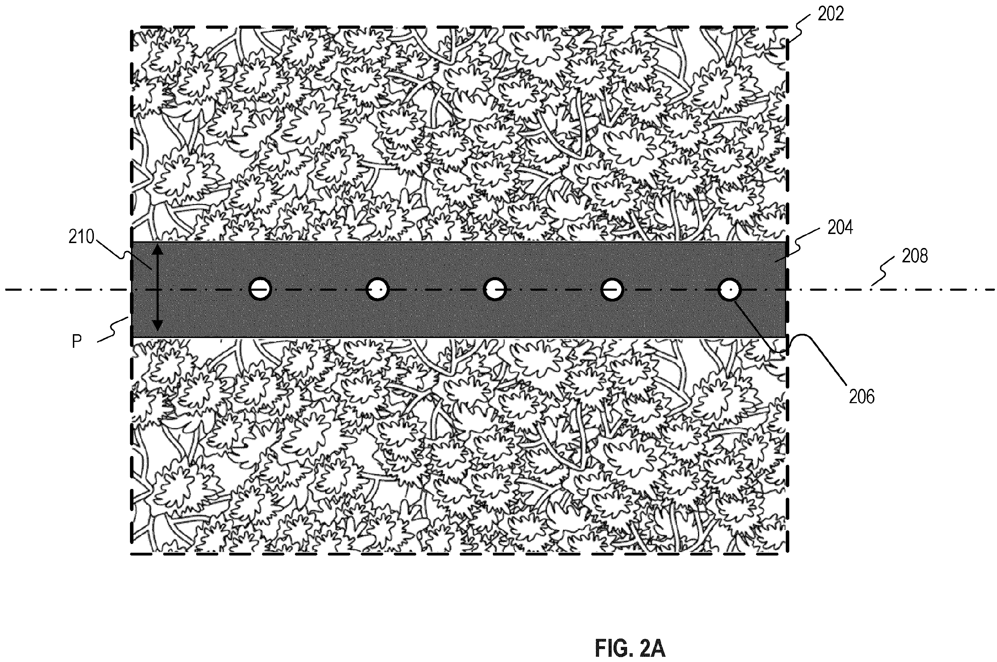

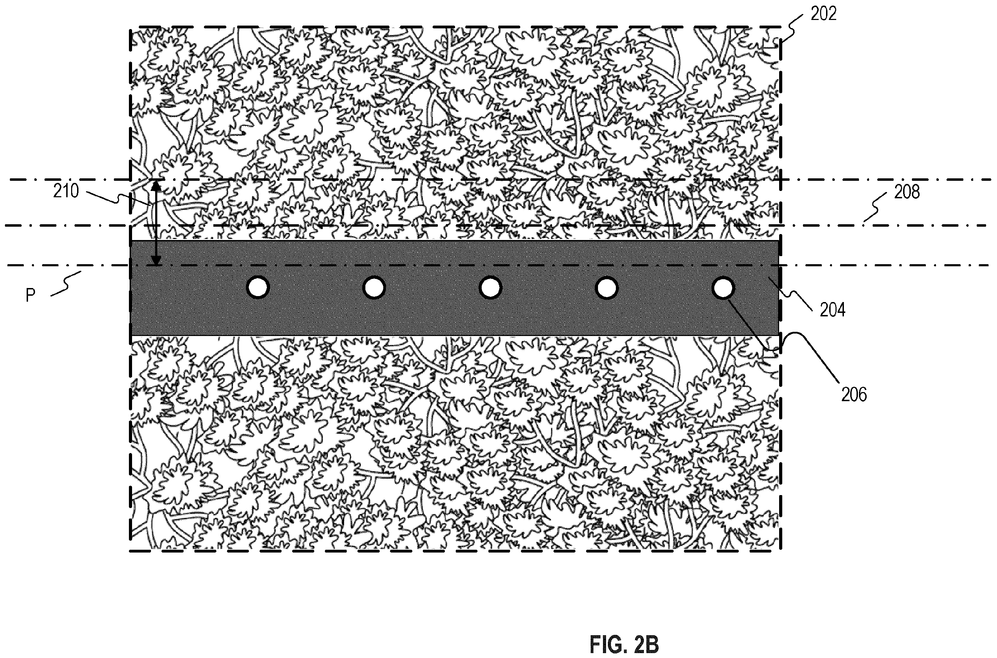

FIG. 2A and FIG. 2B show a target image 202 that includes a road 204. FIGS. 2A and 2B show how ground coordinates (e.g., pose points along a roadway) can be mapped to image coordinates. Additionally, FIGS. 2A and 2B show how roll and pitch parameters (or others) can be used as inputs to a model to accurately map ground coordinates and image coordinates.

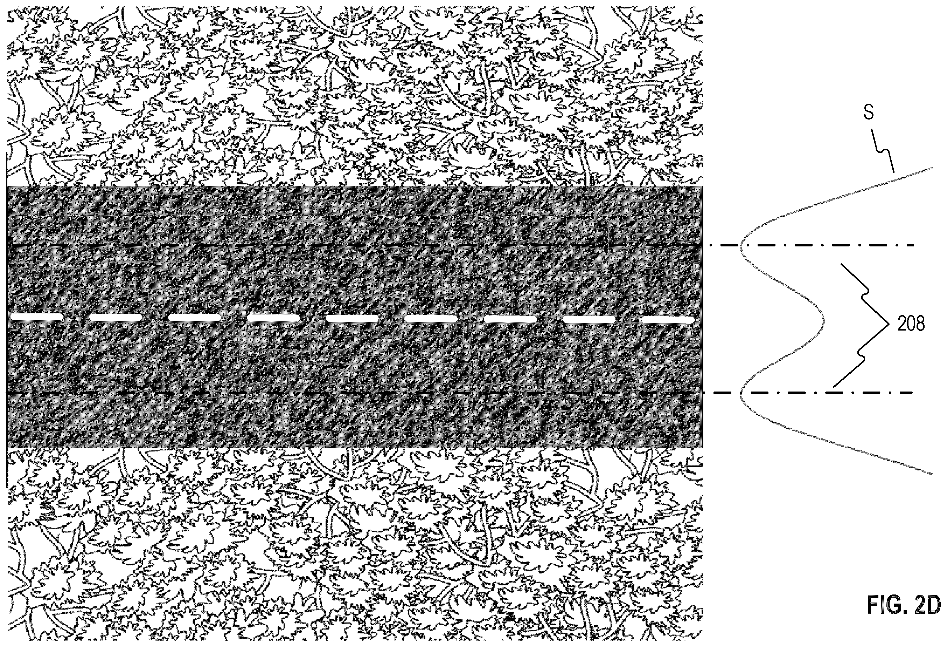

As shown in FIG. 2A, road 204 is marked with five pose points 206 arranged along a trajectory 208. The trajectory 208 extends by a width 210 perpendicular with the direction of the trajectory 208 to form a path P. The road 204 shown in FIG. 2A is a single-lane road such that pose points 206 extend roughly exactly down the center thereof. It should be understood that in alternative embodiments there may be pose points 206 along lanes on either side of a roadway, and in even larger roadways there may be multiple lanes in each direction, each having a set of pose points 206 that extends along it, for example as shown in FIG. 2D.

Pose points 206, as described above, are available from a number of mapping services, at a high density along the length of many roadways, and with spatial coordinates in three dimensions (typically latitude, longitude, and height) known to a very high degree of certainty. Therefore road 204 makes for a very good feature to calibrate the pitch and roll parameters used by sensor or camera 103 (FIGS. 1A and 1B) to map the captured image to image coordinates. Though pose points 206 are shown as white circles in these figures, these are not visible waypoints in an image, but rather are measured data along the trajectory 208. Trajectory 208 is the position where, in the target image 202, the roadway should be centered if pitch and roll parameters were completely accurate in the model used by the sensor or camera 103 (FIGS. 1A and 1B). That is, trajectory 208 is the initial position of the center of the road 204 in the target image 202.

Width 210 can be based upon the road width in a region, in one embodiment. For example, it may be the case that a jurisdiction corresponding to the imaged location has rules or regulations regarding roadway widths. The width of roadways within a satellite image can be determined by reference to the satellite image itself, such as by recognizing road-like features using a machine learning system that recognizes road objects and measures their widths.

In FIG. 2A, path P and road 204 completely coincide. That is, calibration of the pitch parameter and the roll parameter used in the model for sensor or camera 103 (FIGS. 1A and 1B) are accurate. The width of the road 204 and the width 210 of the path P are the same, and the trajectory 208 that defines the center of the path P follows along the very center of the road 204. Thus, in the target image 202 of FIG. 2A, the entirety of path P is on the road 204, and vice versa.

FIG. 2B shows another view of the same road 204, but in which the input parameters to the mapping model (e.g., the pitch parameter, roll parameter, or both, or the coefficients used in an AzEl or RPC model) of the sensor or camera are not aligned to the road 103 (FIGS. 1A and 1B). As a result of this non-alignment, the trajectory 208 runs adjacent to road and only a small portion of path P overlaps with the road 204.

By adjusting the input parameters for pitch and roll, the location of the trajectory 208 and therefore the path P are shifted, tilted, or otherwise modified. As described throughout this disclosure, it is desirable to find input parameters that increase the overlap between the trajectory 208 and path P of the image coordinates, with the road 204 and pose points 206 (i.e., the ground coordinates).

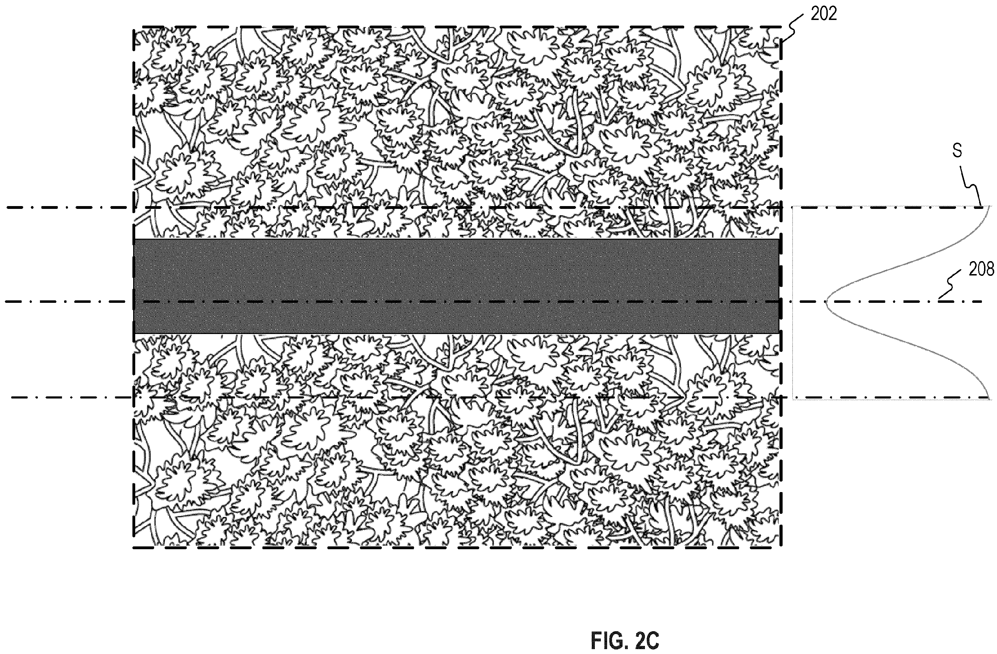

FIGS. 2C and 2D show different weighting functions that can be used for a single-lane roadway and a two-lane roadway, according to one embodiment. For single-lane two-directional roads, a single Gaussian distribution as shown in FIG. 2C can be used to weight the pixels of the satellite image. For larger roads such as residential streets or county roads and as depicted in FIG. 2D, a dual-trajectory weighting function such as the sum of two Gaussian distributions, centered on the trajectories, can be used. In either case, a path centered on either lane would only cover pavement pixels which are virtually identical across long distances. As soon as the path deviates from the road center to the right, the path will cover some of the surrounding pixel outside of the road pavement, which typically vary substantially across long distances. Therefore, two separate trajectories following a single lane road in opposite directions would result in paths covering mostly pavement pixels of similar characteristics, and somewhat surrounding pixels of variable characteristics.

FIGS. 2C and 2D show statistical functions S centered around trajectory(ies) 208. The statistical functions S in these two embodiments are a Gaussian distribution in FIG. 2C, and a combination of Gaussian distributions in FIG. 2D. The tightness of the Gaussian distribution, the inter-lane distance, and the number of Gaussian distributions can be varied in different embodiments to take account of lane width and number of expected lanes. These parameters inherently set a path width as depicted in FIGS. 2A and 2B. It should be understood that different statistical distributions could also be used in different embodiments, rather than just Gaussian distributions.

By weighting the pixels that are closest to the center of the trajectory, a robust measure of uniformity can be calculated that shows a strong minimum in entropy (or similar measures of non-uniformity) when the inputs to the 2D/3D image/ground coordinate mapping function are accurate.

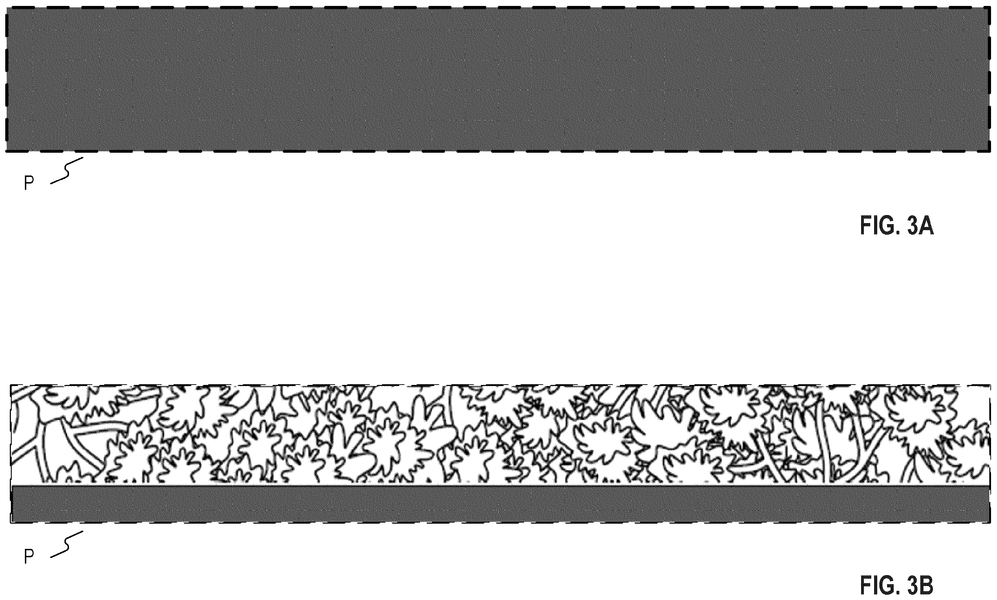

FIGS. 3A and 3B show the contents of path P, as imaged in a properly aligned and improperly aligned of FIGS. 2A and 2B, respectively. As shown in FIG. 3A, the entirety of path P is asphalt. In contrast, as shown in FIG. 3B, only a portion of path P is asphalt while the majority is vegetation or other non-manmade features.

It has been recognized by the inventors that roadways are, at least in imaging contexts, very low-entropy systems. Entropy is a level of disorder, with high-entropy systems being more disordered. Roadways are often made of asphalt or concrete, and less commonly with gravel or dirt, each of which presents a relatively uniform brightness and color in an aerial or satellite image. Pose points collected by commercial vendors on the roads and the roadways thus have a combination of four useful features when it comes to calibrating the pitch and roll of a satellite sensor or camera's pitch and roll models.

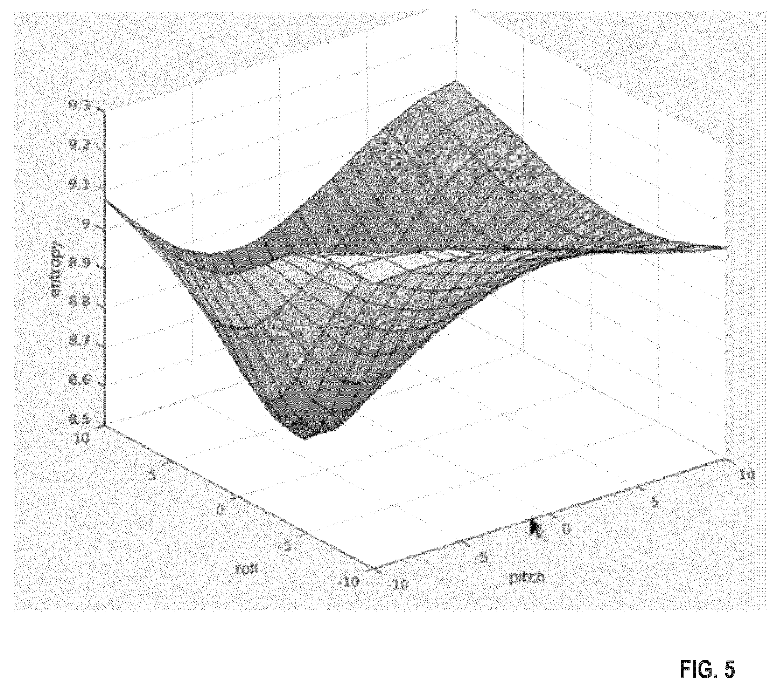

The first useful feature is that the roadway can be rapidly recognized due to its low entropy relative to its surroundings. That is, by adjusting pitch and roll in the sensor model , more or less of the path P will be roadway, which affects the entropy of the portion of that image found within the path P. It is therefore straightforward to identify the location of the roadway in an automated and computationally-efficient manner by seeking settings that have low entropy (see discussion of FIG. 5, below).

The second useful feature is that, once the pitch and roll of the satellite or sensor or camera is adjusted such that the path P coincides with roadway, the physical position of that roadway is very precisely known using pose points 206.

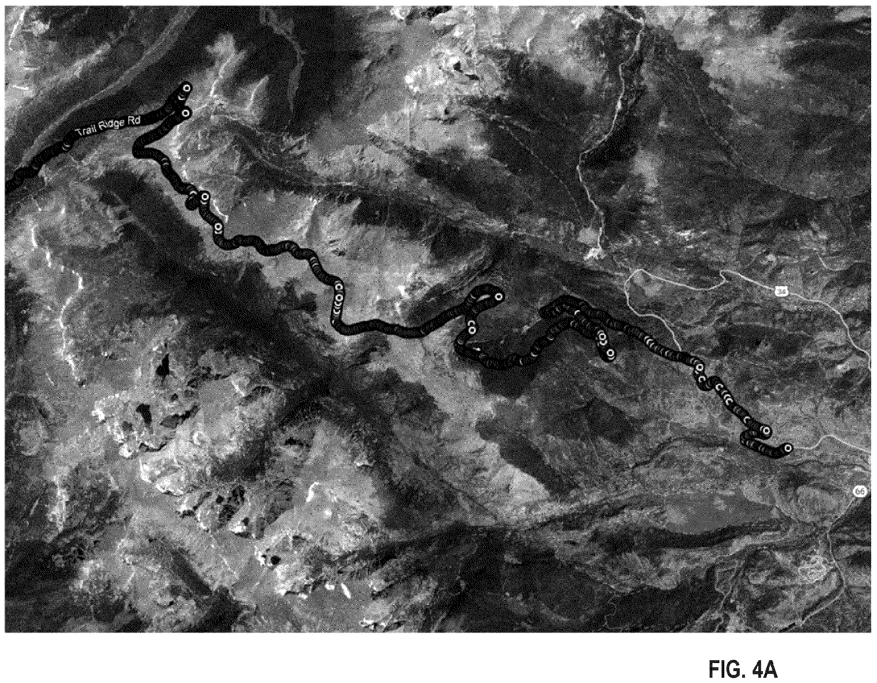

The third useful feature is that roadways are often not straight as shown in FIGS. 2A-3B but rather they are curved, they vary in altitude, and are often arranged along a grid. Additional complexity of such a grid constrains the solutions in orthogonal directions defined by roll and pitch (or other models). Thus it is possible to adjust the pitch and roll parameters that go into the sensor model using a large set of the highly-precisely-known three-dimensional locations. When the pitch and roll parameters are adjusted appropriately, the position of the roadway (as represented by the trajectory 208 and path P) will overlap with the actual position of the roadway 204 in the target image 202. An example of a curved and networked grid of roadways having a large number of pose points thereon is provided in FIG. 4A, discussed in more detail below.

The fourth useful feature is the multitude of trajectories typically collected over and area of interest overlapping a single or multiple satellite images. The multitude allows us to assume that, in the in a statistical sense, the average ground position represents centra of the roads even though individual trajectories have been collated away from the road or lane centra. This allows for unbiased adjustment of roll and pitch sensor parameters when combined with the uniformity measure.

The goodness of fit can be determined by measuring the uniformity of the portion of the target image 202 that is within the confines of path P. High levels of uniformity in that region indicate that the target image 202 is significantly overlapping with the road. Less uniformity, or stated another way more disorder, corresponds to non-roadway elements captured within the path P.

As mentioned above, entropy is one convenient way to measure uniformity and therefore determine whether the path P contains a roadway with a highly uniform surface for imaging. Other metrics such as coefficient of variation, histogram analysis, texture analysis, structural similarity indexing, spatial frequency analysis, or the like could be used in other embodiments.

It has long been thought that - somewhat intuitively - using highly specific fixed points with easily photoidentifiable features is the best way to correlate or map the satellite image coordinates to ground coordinates. *Chintain,* for example, cited previously as teaching various types of geometric correction of satellite imagery, describes using a polynomial model to establish a correspondence between the global coordinates of the distorted image to those in reference image or map. This is done by mapping the 2D image locations of a photoidentifiable Ground Control Point to its ground location represented by 3D ground coordinates. Such mapping allows correcting the sensor model through a set of photogrammetric operations, and has been the cornerstone in image mapping industry. Intermap, a provider of geospatial data mapping services, likewise states that the important aspects of a good fixed point are that it be "a point that has high contrast with its surroundings" or "at the boundary between different surface materials," and notes that homogenous landscapes do not "leave much to work with."

As disclosed herein, the opposite approach is taken: features that have a notable lack of contrast such as roadways, waterways, or paths are used precisely because they lack uniqueness and instead are recognizable in a satellite image based on their uniformity and consistency across an area. That is, whereas conventional image-to-ground-coordinate mapping uses photoidentifable points, the mapping described herein uses high-uniformity (such as low entropy) fixed areas

The disclosed approach, based on information theory, uses roadways as low entropy fixed areas to improve the geolocation accuracy of a satellite image. It has been found that the accuracy of the information theory approach is about the same as the photogrammetric approach, 0.5-1.0 meters. If the width 210 is set too small, then a test for uniformity will be minimized across a range of pitch and roll parameters, because trajectory 208 can be anywhere along a range in the vertical axis with respect to the page and path P will still only capture roadway.

Width 210 can therefore be set to correspond to the actual size of structures that would exhibit high levels of uniformity. In many jurisdictions, for example, roadway width is regulated to within certain bounds, or roads, canals, streets, or other similar features that are high-uniformity and include corresponding pose points may have a normal size by convention. Width 210 is a parameter that can be adjusted in a system that implements a mapping of satellite imaging to pose points as discussed throughout this disclosure. For example, width 210 can be adjusted to match the typical lane width or roadway width of a jurisdiction that is being imaged in order to improve precision.

Though not discussed in detail herein or with respect to FIGS. 2A-3B, it should be understood that in some systems width 210 can be made variable and determined for a particular satellite image. The process for determining the variable width could attempt to find a sharp local minimum in the entropy function depicted in FIG. 5, for example.

FIG. 4A shows real-world satellite images of a roadway. The roadway shown in FIG. 4A crosses the continental divide in Colorado, USA.

FIG. 4A is a satellite image of the roadway across a large imaged area, with everything but the expected position of the roadway excluded.

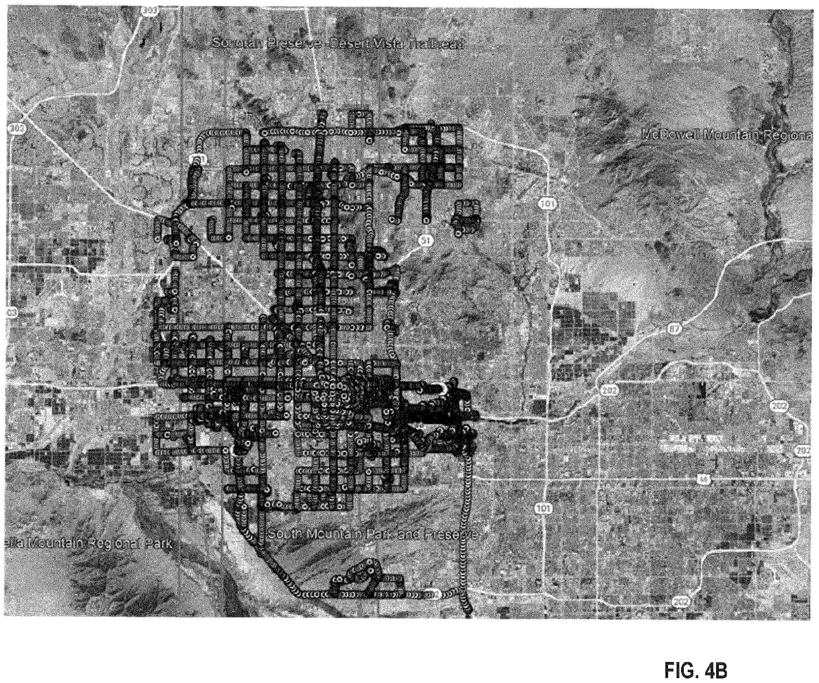

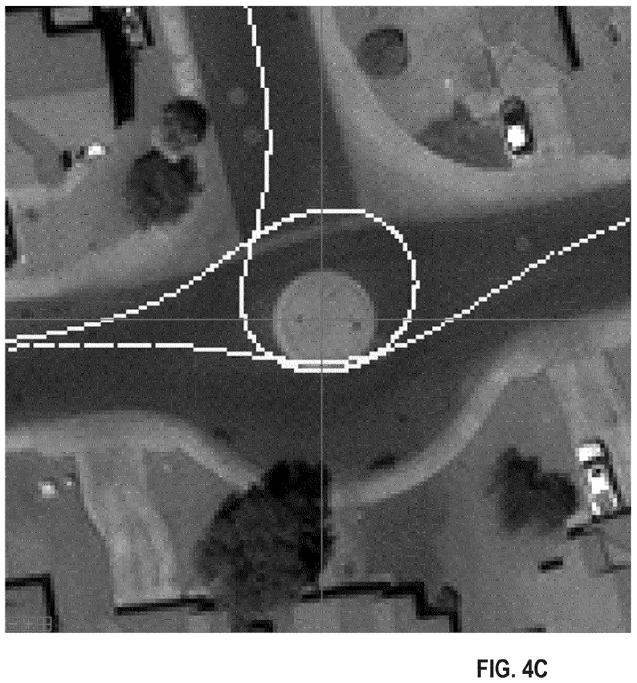

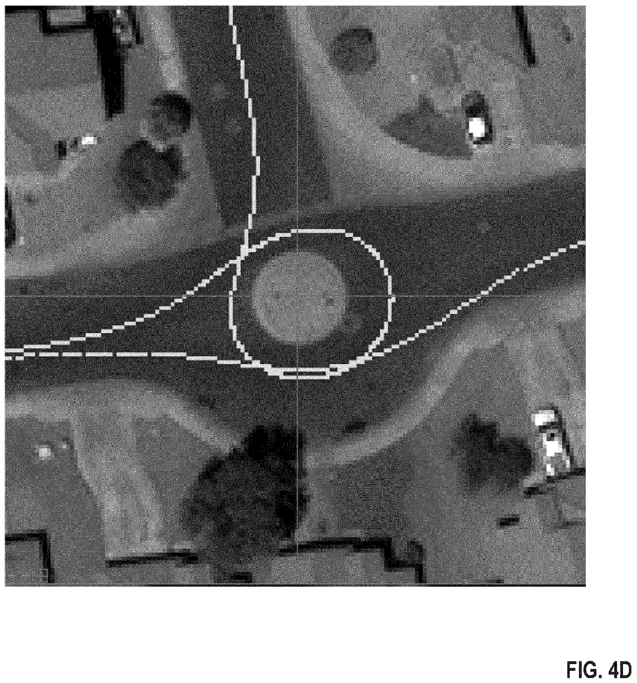

FIG 4B shows a network of mobile trajectories collected over Phoenix, Arizona, which was used to validate the concepts described in this disclosure. Figures 4C and 4D are more detailed view from therein, representing improvements in trajectory position, mapped into the original image (FIG. 4C) and corrected image (FIG. 4D). The trajectory, indicated by the line on the satellite image, is offset in FIG. 4C and shows up too high on the roundabout, resulting in a significant portion of the middle circle or the squared corners of the intersection being included in even a narrow Path surrounding that trajectory. In FIG. 4D, after pitch and roll parameters have been adjusted to reduce the entropy of the Path surrounding the trajectory to a minimum (or at least reduce it a significant amount), the trajectory is nearly perfectly arranged along the roundabout roadway, such that the Path surrounding that trajectory will encompass more low-entropy roadway than high-entropy surroundings.

FIG. 5 visually depicts an entropy-based measure of uniformity as a function of pitch and roll. As shown in FIG. 5, the global minimum in a measure of entropy can be found at a pitch level of between about -5 and -6 microradians while the roll is between about -2 and -3 microradians. The entropy depicted on the vertical axis is the entropy of a path surrounding an initial roadway position comprising pose points, as described with respect to FIGS. 2A-3B. Adjusting pitch parameters and roll parameters used in the sensor model results in a corresponding change in the placement of the trajectory on the image (208, FIGS. 2A and 2B) and therefore a change in the amount of roadway that is within the portion of the image that is path (P, FIGS. 2A and 2B).

Changing pitch and roll parameters therefore modifies the portion of the path P (FIGS. 2A and 2B) that is roadway and the remainder that is not. Thus, pitch and roll can be adjusted to increase uniformity (i.e., in the example of FIG. 5, find the minimum entropy) of the portion of the satellite image that is within the path P (FIGS. 2A and 2B).

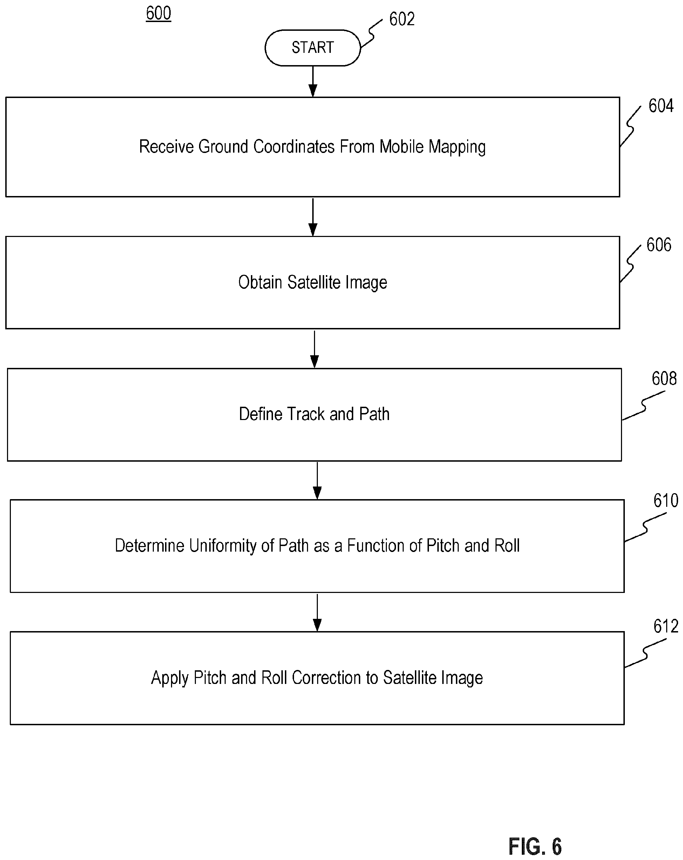

FIG. 6 is a flowchart corresponding to a method 600 for improving accuracy of a mapping between a satellite image's coordinates and ground coordinates. At 602, the method 602 starts.

At 604, ground coordinates from mobile mapping are received. As described herein, these ground coordinates can be received from any of a number of terrestrial sources, such as governmental departments of transportation or commercial mapping companies. In many cases, these mobile mapping coordinates are stored as pose points that are highly accurate and densely spaced along roadways. Ground coordinates from mobile mapping can include roadways, paths, waterways, or the like.

At 606, the method includes obtaining a satellite image and a sensor model. The sensor model obtained at 606 can be adjusted by modifying roll and pitch parameters. This adjustment can be performed using known software modeling systems and does not require physical adjustment to a satellite or a sensor or camera nor does it require obtaining any additional images to make the correction. Obtaining the satellite image at 606 can include receiving data via a networked computer, stored images on a local drive, or the like. That is, the image that is received at 606 can be generated at one location but obtained and manipulated at a computer system at another location.

At 608, trajectory(s) and path(s) are defined.. Each trajectory that is defined also defines a corresponding path having a predefined width around the trajectory.

At 610, the optical uniformity of the path is determined. If there is very little error in the pitch and roll parameters used when obtaining the satellite image at 606, then the optical uniformity of the path is high. However, if the pitch and roll parameters are not reflective of the actual pitch or roll of the satellite used to capture the image, then the uniformity within the satellite image obtained at 606 will be higher. The pitch and roll parameters can be adjusted and the satellite image resampled or otherwise geometrically corrected, and the optical uniformity of the path based on those adjusted parameters can be calculated. When the optical uniformity is higher, the parameters are closer to accurate.

At 612, the parameters that correspond to the highest level of uniformity (or lowest entropy) in the obtained satellite image are used to correct the entirety of the image. That is, while the paths are used to determine the pitch and roll parameters, the entire image obtained at 606 can be corrected based on the values that are found to be sufficiently accurate.

As discussed above, one of the advantages of the methods described herein is that they use large, easily-accessible, and highly precise ground coordinate location data. Another advantage is that the methods described herein are significantly less computationally difficult to implement than calculations that use the entirety of the satellite image. As shown in FIG. 4A, for example, only a very small portion of the satellite image may be considered to be a path P, and it is only this portion that is used at 608 and 610. The correction of the entire satellite image at 612 can be done only once, after the parameters for pitch and roll are determined to a suitable level of accuracy.

The correction applied to the satellite image can be an improvement in pointing accuracy. In other words, by determining a correction to the parameters that are input into a satellite image processing model, the actual pointing direction of the satellite can be determined more accurately and the image can be resampled or rectified in a way that results in a more accurate image that maps image coordinates to ground coordinates more accurately.

There may be various ways for implementing both the determination of uniformity as well as the application of the determined parameters therefrom to the entire satellite image at 610 and 612, respectively. These can include by using any of a variety of programming languages (e.g., a C-family programming language, PYTHON, JAVA, RUST, HASKELL, other languages, or combinations thereof), libraries (e.g., libraries that provide functions for obtaining, processing, and presenting data), compilers, and interpreters to implement aspects described herein. Example libraries include NLTK (Natural Language Toolkit) by Team NLTK (providing natural language functionality), PYTORCH by META (providing machine learning functionality), NUMPY by the NUMPY Developers (providing mathematical functions), and BOOST by the Boost Community (providing various data structures and functions) among others. Operating systems (e.g., WINDOWS, LINUX, MACOS, IOS, and ANDROID) may provide their own libraries or application programming interfaces useful for implementing aspects described herein, including user interfaces and interacting with hardware or software components. Web applications can also be used, such as those implemented using JAVASCRIPT or another language. A person of skill in the art, with the benefit of the disclosure herein, can use programming tools to assist in the creation of software or hardware to achieve techniques described herein. Such tools can include intelligent code completion tools (e.g., INTELLISENSE) and artificial intelligence tools (e.g., GITHUB COPILOT).

One or more of the elements 604, 606, 608, 610, and 612, or some combination thereof, can benefit from or be implemented using a machine learning framework. A machine learning framework is a collection of software and data that implements artificial intelligence trained to provide output based on input. Examples of artificial intelligence that can be implemented in a trainable way include neural networks (including recurrent neural networks), language models (including so-called "large language models"), generative models, natural language processing models, adversarial networks, decision trees, Markov models, support vector machines, genetic algorithms, others, or combinations thereof. Machine learning frameworks or components thereof are often built or refined from existing frameworks, such as TENSORFLOW by GOOGLE, INC. or PYTORCH by the PYTORCH community. The machine learning framework can include one or more models that are the structured representation of learning and an interface that supports use of the model.

The model can take any of a variety of forms. In many examples, the model includes representations of nodes (e.g., neural network nodes, decision tree nodes, Markov model nodes, other nodes, or combinations thereof) and connections between nodes (e.g., weighted or unweighted unidirectional or bidirectional connections). In certain implementations, the model can include a representation of memory (e.g., providing long short-term memory functionality). Where the set includes more than one model, the models can be linked, cooperate, or compete to provide output.

The interface can include software procedures (e.g., defined in a library) that facilitate the use of the model, such as by providing a way to interact with the model (e.g., receive and prepare input, processing the input with the model and provide output). The interface can define a vector embedding technique for creating a representation of data usable as input into the model. The software can further provide the ability to create, customize, fine tune, and train the model.

In an example implementation, interface can provide a training method that includes initializing a model, obtaining training data, providing a portion of the training data to the model to produce an actual output, comparing the expected output with the actual output, updating the model based on the result of the comparison (e.g., updating weights of the model, such as using backpropagation), continuing providing training data and updating the model until a stopping criterion has been reached, and deploying the trained model for use in production.

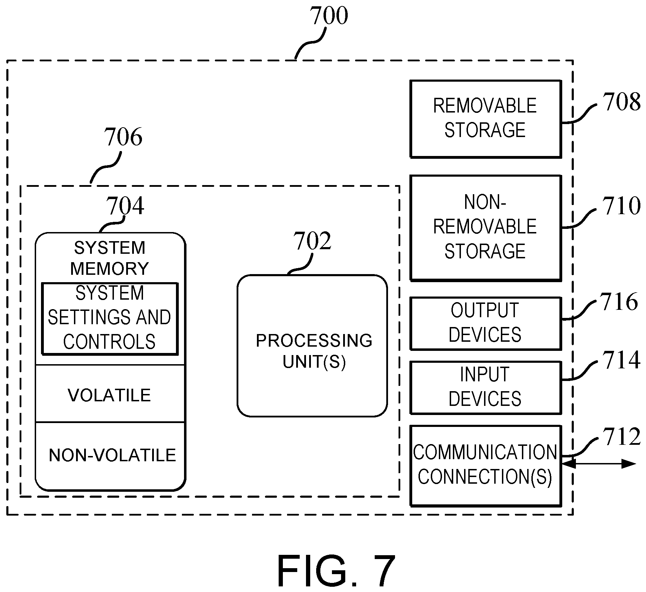

FIG. 7 depicts one example of a suitable operating environment 700 in which one or more of the present examples can be implemented. This is only one example of a suitable operating environment and is not intended to suggest any limitation as to the scope of use or functionality. Other well-known computing systems, environments, and/or configurations that can be suitable for use include, but are not limited to, personal computers, server computers, hand-held or laptop devices, multiprocessor systems, microprocessor-based systems, programmable consumer electronics such as smart phones, network PCs, minicomputers, mainframe computers, tablets, distributed computing environments that include any of the above systems or devices, and the like.

In its most basic configuration, operating environment 700 typically includes at least one processing unit 702 and memory 704. Depending on the exact configuration and type of computing device, memory 704 (storing, among other things, instructions to control the eject the samples, move the stage, or perform other methods disclosed herein) can be volatile (such as RAM), non-volatile (such as ROM, flash memory, etc.), or some combination of the two. This most basic configuration is illustrated in FIG. 7 by dashed line 706. Further, operating environment 700 can also include storage devices (removable, 708, and/or non-removable, 710) including, but not limited to, magnetic or optical disks or tape. Similarly, environment 700 can also have input device(s) 714 such as touch screens, keyboard, mouse, pen, voice input, etc., and/or output device(s) 716 such as a display, speakers, printer, etc. Also included in the environment can be one or more communication connections 712, such as LAN, WAN, point to point, Bluetooth, RF, etc.

Operating environment 700 typically includes at least some form of computer readable media. Computer readable media can be any available media that can be accessed by processing unit 702 or other devices having the operating environment. By way of example, and not limitation, computer readable media can include computer storage media and communication media. Computer storage media includes volatile and nonvolatile, removable and non-removable media implemented in any method or technology for storage of information such as computer readable instructions, data structures, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, solid state storage, or any other tangible medium which can be used to store the desired information. Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media. A computer-readable device is a hardware device incorporating computer storage media.

The operating environment 700 can be a single computer operating in a networked environment using logical connections to one or more remote computers. The remote computer can be a personal computer, a server, a router, a network PC, a peer device or other common network node, and typically includes many or all of the elements described above as well as others not so mentioned. The logical connections can include any method supported by available communications media. Such networking environments are commonplace in offices, enterprise-wide computer networks, intranets and the Internet.

In some examples, the components described herein include such modules or instructions executable by operating environment 700 that can be stored on computer storage medium and other tangible mediums and transmitted in communication media. Computer storage media includes volatile and non-volatile, removable and non- removable media implemented in any method or technology for storage of information such as computer readable instructions, data structures, program modules, or other data. Combinations of any of the above should also be included within the scope of readable media. In some examples, operating environment 700 is part of a network that stores data in remote storage media for use by the operating environment 700.

While particular uses of the technology have been illustrated and discussed above, the disclosed technology can be used with a variety of data structures and processes in accordance with many examples of the technology. The above discussion is not meant to suggest that the disclosed technology is only suitable for implementation with the data structures shown and described above. For example, while certain technologies described herein were primarily described in the context of queueing structures, technologies disclosed herein are applicable to data structures generally.

This disclosure described some aspects of the present technology with reference to the accompanying drawings, in which only some of the possible aspects were shown. Other aspects can, however, be embodied in many different forms and should not be construed as limited to the aspects set forth herein. Rather, these aspects were provided so that this disclosure was thorough and complete and fully conveyed the scope of the possible aspects to those skilled in the art.

As should be appreciated, the various aspects (e.g., operations, memory arrangements, etc.) described with respect to the figures herein are not intended to limit the technology to the particular aspects described. Accordingly, additional configurations can be used to practice the technology herein and/or some aspects described can be excluded without departing from the methods and systems disclosed herein.

Similarly, where operations of a process are disclosed, those operations are described for purposes of illustrating the present technology and are not intended to limit the disclosure to a particular sequence of operations. For example, the operations can be performed in differing order, two or more operations can be performed concurrently, additional operations can be performed, and disclosed operations can be excluded without departing from the present disclosure. Further, each operation can be accomplished via one or more sub-operations. The disclosed processes can be repeated.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

Aspects of the invention:
Aspect 1. A method for improving a pointing accuracy of a satellite imaging system, the method consisting of:
   receiving a set of ground coordinates of a region, the set of ground coordinates including a plurality of positions of pose points;
   obtaining a satellite image of the region, the satellite image defining image coordinates;
   mapping the ground coordinates to the satellite image, including the plurality of pose points, according to a sensor model function having input parameters;
   defining a trajectory in the satellite image of the region based upon the plurality of positions of the plurality of pose points;
   defining a path in the satellite image of the region, the path extending perpendicular to the trajectory, and assigning a weighting function to the path;
   determining a level of uniformity of a portion of the satellite image within the path as weighted by the weighting function as a function of the input parameters;
   identifying a selected set of the input parameters that result in a desired level of uniformity; and
   correcting a satellite image geolocation based on the selected set of input parameters.
Aspect 2. The method of aspect 1, wherein the set of ground coordinates are obtained from a mobile mapping resource.
Aspect 3. The method of aspect 1 or 2, wherein the pose points are arranged on a roadway.
Aspect 4. The method of any of aspects 1 - 3, wherein the plurality of pose points each include latitude, longitude, and altitude on the roadway.
Aspect 5. The method of any of aspects 2 - 4, wherein a predetermined width is based on an approximate lane or roadway width.
Aspect 6. The method of any of aspects 1 - 5, wherein the sensor model function uses one of the set consisting of: a rational polynomial coefficient function, an azimuth-elevation function, and a satellite ephemeris function.
Aspect 7. The method of any of aspects 5 - 6, wherein the predetermined width is based upon data from the mobile mapping resource.
Aspect 8. The method of any of aspects 1 - 7, wherein the level of uniformity is a level of entropy.
Aspect 9. A computer readable medium that stores a set of instructions which when executed perform a method for mapping a structure, the method executed by the set of instructions consisting of:
   receiving a set of ground coordinates of a region, the set of ground coordinates including a plurality of positions of pose points;
   obtaining a satellite image of the region, the satellite image defining image coordinates;
   mapping the ground coordinates to the satellite image, including the plurality of pose points, according to a sensor model function having input parameters;
   defining a trajectory in the satellite image of the region based upon the positions of the plurality of pose points;
   defining a path in the satellite image of the region, the path extending perpendicular to the trajectory, and assigning a weighting function to the path;
   determining a level of uniformity of a portion of the satellite image within the path as weighted by the weighting function as a function of the input parameters;
   identifying a selected set of the input parameters that result in a desired level of uniformity; and
   correcting a satellite image geolocation based on the selected set of input parameters.
Aspect 10. The computer readable medium of aspect 9, characterized by one or more of the following features:
   - the set of ground coordinates are obtained from a mobile mapping resource;
   - the pose points are arranged on a roadway;
   - the plurality of pose points each include latitude, longitude, and altitude of one of the set of ground coordinates;
   - the path is defined according to a predetermined width based on a typical roadway width;
   - the predetermined width is modified based on the satellite image of the region.
Aspect 11. The computer readable medium of aspect 10, wherein the predetermined width is based upon data from the mobile mapping resource.
Aspect 12. A method of improving a level of correspondence between a set of image coordinates of a captured image and a set of ground coordinates of an area including pose points captured in the captured image, the method consisting of:
   identifying a high-uniformity region including a plurality of pose points located in the area, the pose points defined in the ground coordinates;
   defining a trajectory in the set of image coordinates, the trajectory based upon ground locations of the pose points;
   defining a path in the set of image coordinates, the path extending perpendicular to the trajectory by a predetermined width and including a weighting function;
   adjusting input parameters of a sensor model function to determine a level of uniformity in the path as a function thereof; and
   adjusting the captured image according to an improved set of input parameters that correspond to a sufficiently high value of the function.
Aspect 13. The method of aspect 12, characterized by one or more of the following features:
   - the pose points are arranged on a roadway;
   - the plurality of pose points each include latitude, longitude, and altitude information;
   - the predetermined width is based on a typical roadway width;
   - the predetermined width is determined based on an image of the region.

## Claims

1. A method for improving a pointing accuracy of a satellite imaging system, the method comprising:
receiving a set of ground coordinates of a region, the set of ground coordinates including a plurality of positions of pose points;
obtaining a satellite image of the region, the satellite image defining image coordinates;
mapping the ground coordinates to the satellite image, including the plurality of pose points, according to a sensor model function having input parameters;
defining a trajectory in the satellite image of the region based upon the plurality of positions of the plurality of pose points;
defining a path in the satellite image of the region, the path extending perpendicular to the trajectory, and assigning a weighting function to the path;
determining a level of uniformity of a portion of the satellite image within the path as weighted by the weighting function as a function of the input parameters;
identifying a selected set of the input parameters that result in a desired level of uniformity; and
correcting a satellite image geolocation based on the selected set of input parameters.

2. The method of claim 1, wherein the set of ground coordinates are obtained from a mobile mapping resource.

3. The method of claim 1 or 2, wherein the pose points are arranged on a roadway.

4. The method of any of claims 1 - 3, wherein the plurality of pose points each include latitude, longitude, and altitude on the roadway.

5. The method of any of claims 2 - 4, wherein a predetermined width is based on an approximate lane or roadway width.

6. The method of any of claims 1 - 5, wherein the sensor model function uses one of the set consisting of: a rational polynomial coefficient function, an azimuth-elevation function, and a satellite ephemeris function.

7. The method of any of claims 5 - 6, wherein the predetermined width is based upon data from the mobile mapping resource.

8. The method of any of claims 1 - 7, wherein the level of uniformity is a level of entropy.

9. A computer readable medium that stores a set of instructions which when executed perform a method for mapping a structure, the method executed by the set of instructions comprising:
receiving a set of ground coordinates of a region, the set of ground coordinates including a plurality of positions of pose points;
obtaining a satellite image of the region, the satellite image defining image coordinates;
mapping the ground coordinates to the satellite image, including the plurality of pose points, according to a sensor model function having input parameters;
defining a trajectory in the satellite image of the region based upon the positions of the plurality of pose points;
defining a path in the satellite image of the region, the path extending perpendicular to the trajectory, and assigning a weighting function to the path;
determining a level of uniformity of a portion of the satellite image within the path as weighted by the weighting function as a function of the input parameters;
identifying a selected set of the input parameters that result in a desired level of uniformity; and
correcting a satellite image geolocation based on the selected set of input parameters.

10. The computer readable medium of claim 9, **characterized by** one or more of the following features:
- the set of ground coordinates are obtained from a mobile mapping resource;
- the pose points are arranged on a roadway;
- the plurality of pose points each include latitude, longitude, and altitude of one of the set of ground coordinates;
- the path is defined according to a predetermined width based on a typical roadway width;
- the predetermined width is modified based on the satellite image of the region.

11. The computer readable medium of claim 10, wherein the predetermined width is based upon data from the mobile mapping resource.

12. A method of improving a level of correspondence between a set of image coordinates of a captured image and a set of ground coordinates of an area including pose points captured in the captured image, the method comprising:
identifying a high-uniformity region including a plurality of pose points located in the area, the pose points defined in the ground coordinates;
defining a trajectory in the set of image coordinates, the trajectory based upon ground locations of the pose points;
defining a path in the set of image coordinates, the path extending perpendicular to the trajectory by a predetermined width and including a weighting function;
adjusting input parameters of a sensor model function to determine a level of uniformity in the path as a function thereof; and
adjusting the captured image according to an improved set of input parameters that correspond to a sufficiently high value of the function.

13. The method of claim 12, **characterized by** one or more of the following features:
- the pose points are arranged on a roadway;
- the plurality of pose points each include latitude, longitude, and altitude information;
- the predetermined width is based on a typical roadway width;
- the predetermined width is determined based on an image of the region.
